# FASCICULE DE BREVET EUROPEEN

(11) **EP 3 714 986 B1**
(45) Date de publication et mention de la délivrance du brevet: **11.03.2026**
(21) Numéro de dépôt: 20166116.2
(22) Date de dépôt: 27.03.2020
(51) Int. Cl.: B05B 9/04, B05B 15/30, B05B 13/00

(54) **CANNE ET ENSEMBLE D'ASPIRATION DE PEINTURE LIQUIDE ET PROCÉDÉ DE FABRICATION D'UNE TELLE CANNE**
ROHR UND ANSAUGEINHEIT FÜR FLÜSSIGE FARBE SOWIE HERSTELLUNGSVERFAHREN EINES SOLCHEN ROHRS
ROD AND ASSEMBLY FOR SUCTION OF LIQUID PAINT AND METHOD FOR MANUFACTURING SUCH A ROD

(30) Priorité: 28.03.2019 FR 1903245
(43) Date de publication de la demande: 30.09.2020
(73) Titulaire: Exel Industries, 51200 Epernay (FR)
(72) Inventeur: PLANTARD, Nicolas, 75009 Paris (FR); BATLLO, Benoit, 75009 Paris (FR); MORALES, François, 75009 Paris (FR)
(74) Mandataire: Lavoix

(56) Documents cités:
- EP-A2- 1 647 631
- FR-A- 1 599 173
- FR-A1- 2 537 696
- US-A- 4 998 993
- US-A- 5 217 238
- US-A- 700 378
- US-A1- 2013 277 455
- US-A1- 2014 312 142
- US-B2- 8 651 397

## Description

La présente invention concerne une canne d'aspiration de peinture liquide, un ensemble d'aspiration de peinture liquide comprenant une telle canne et un procédé de fabrication d'une telle canne.

L'invention est relative au domaine des projecteurs de peinture liquide.

Un projecteur de peinture liquide connu comprend un pistolet à peinture alimenté avec de la peinture liquide par une pompe pneumatique. Pour cela, on prévoit généralement un tube flexible de longueur suffisante, par exemple plusieurs mètres ou plusieurs dizaines de mètres, pour que l'opérateur puisse manipuler avec aisance le pistolet à peinture, alors que la pompe reste fixe, en étant montée sur un chariot ou sur un support fixé à demeure sur le sol, tel qu'un mur ou une potence. La pompe puise de la peinture liquide dans un seau de peinture ou dans une citerne de peinture liquide par l'intermédiaire d'une canne d'aspiration. La canne d'aspiration est fluidiquement connectée à la pompe, en amont de ladite pompe, et présente une extrémité libre qui trempe dans le seau à peinture pour aspirer ladite peinture sous l'action de la pompe. Plus précisément, la pompe comprend une entrée d'aspiration tournée vers le bas, sur laquelle est monté un raccord métallique rectiligne standard. A ce raccord métallique, on connecte un tube intermédiaire flexible appartenant à la canne d'aspiration. A l'autre extrémité du tube flexible, la canne d'aspiration comprend un tube coudé métallique plongeant partiellement dans le seau de peinture liquide.

Toutefois, l'orientation verticale du raccord standard n'est pas toujours satisfaisante compte-tenu de la hauteur de la pompe, ce peut conduire à impartir une forte flexion du tube intermédiaire flexible. A la place du raccord standard rectiligne, on pourrait prévoir un raccord standard en coudé en « L ». Toutefois, la mise en œuvre d'un tel raccord coudé en « L » entraîne une importante perte de charge qui nuit fortement au pompage de la peinture et peut donc nécessiter de prévoir une pompe de plus forte puissance.

US 4 998 993 A concerne un dispositif de pulvérisation incluant un premier tube rigide plongé dans un matériau à pulvériser, un deuxième tube droit et rigide connecté à une pompe, et un tube flexible reliant les deux tubes rigides.

US 8 651 397 B2 décrit un pulvérisateur de peinture, dans lequel un tube flexible d'aspiration de peinture est relié à une pompe par l'intermédiaire d'un coude et est plongé dans un contenant de peinture.

Sans lien avec le domaine technique de l'invention, US 700 378 décrit un compensateur flexible pour des tuyaux de plomberie.

L'un des buts de l'invention est donc de répondre à ces inconvénients en proposant une nouvelle canne d'aspiration qui évite d'imposer une courbure trop forte au tube intermédiaire tout en offrant une perte de charge réduite pour la peinture traversant la canne d'aspiration, et tout en étant facile à fabriquer.

L'invention a pour objet une canne d'aspiration de peinture liquide selon la revendication 1.

Une idée à la base de l'invention est de prévoir que le tube aval guide une circulation en courbe progressive de la peinture liquide depuis l'extrémité de réception jusqu'à l'extrémité de connexion, afin d'éviter la génération d'une perte de charge trop importante. En effet, la courbure progressive de la trajectoire du tube aval promeut une bonne circulation de la peinture liquide, laquelle présente généralement des propriétés d'écoulement médiocres, incluant par exemple une viscosité relativement élevée. L'expression « trajectoire » désigne une courbe géométrique du tube aval, parfois désignée par l'expression « fibre neutre ». Grâce à la courbure du tube aval, la partie de la trajectoire au niveau de l'extrémité de réception présente avantageusement une orientation horizontale, ou pour le moins inclinée par rapport à la verticale, ce qui évite une flexion trop importante tube intermédiaire flexible qui y est connecté. En outre, le tube aval est facile à fabriquer, puisqu'il peut avantageusement être obtenu à l'aide d'un procédé de fabrication similaire à celui du tube amont, par exemple incluant un cintrage d'un tube brut rectiligne pour obtenir respectivement le coude aval et le coude amont.

D'autres caractéristiques optionnelles et avantageuses de l'invention, que l'on considère selon toute combinaison techniquement possible, sont définies ci-dessous :
- le rapport du diamètre sur le rayon de courbure est compris entre 0,55 et 0,70, et est préférentiellement égal à 0,625.
- le diamètre est compris entre 20 mm et 30 mm, et est préférentiellement égal à 25 mm ; et le rayon de courbure est compris entre 31 mm et 50 mm, et est préférentiellement égal à 40 mm.
- la partie courbe de la trajectoire définit un angle au centre de valeur comprise entre 85° et 95°, la valeur de l'angle au centre étant préférentiellement égale à 90° de sorte que la section de passage de l'extrémité de réception est perpendiculaire à la section de passage de l'extrémité de connexion.
- la canne comprend en outre un écrou de connexion pour fixement attacher le tube aval à la pompe, l'écrou de connexion étant monté à l'extrémité de connexion, de façon librement pivotante par rapport au tube aval autour de la trajectoire, l'écrou de connexion comprenant au moins une oreille par l'intermédiaire de laquelle le serrage de l'écrou de connexion peut être opéré.
- la canne comprend un épaulement radial externe formé à l'extrémité de connexion et formant une surface conique conçue pour être reçue en appui contre un siège de connexion complémentaire appartenant à la pompe, lorsque la canne est connectée à la pompe, la surface conique étant centrée sur la trajectoire et convergeant le long de la trajectoire dans un sens aval dirigé à l'opposé de l'extrémité de réception.
- le tube amont et le tube aval sont métalliques, de préférence en acier inoxydable, et le tube intermédiaire en matériau souple, de préférence en élastomère.

L'invention a également pour objet un ensemble d'aspiration de peinture liquide pour un projecteur de peinture liquide, l'ensemble d'aspiration comprenant une canne, conforme à ce qui précède, et une pompe, la pompe étant fluidiquement connectée à l'extrémité de connexion de la canne de façon à pouvoir aspirer de la peinture liquide par l'intermédiaire de la canne.

L'invention a également pour objet un procédé de fabrication d'une canne conforme à ce qui précède, ou d'un ensemble d'aspiration conforme à ce qui précède, le procédé comprenant les étapes suivantes :
- fourniture ou fabrication du tube amont ;
- fourniture ou fabrication du tube intermédiaire ;
- fabrication du tube aval à partir d'un tube brut rectiligne, la fabrication du tube aval incluant une sous-étape de cintrage du tube brut rectiligne pour former le coude aval du tube aval avec le rayon de courbure, de sorte que le rapport du diamètre sur le rayon de courbure est inférieur à 1;
- adjonction de la crépine au tube amont; et
- assemblage du tube amont, du tube intermédiaire et du tube aval.

La description qui suit concerne des exemples de réalisation de l'invention, donnés dans un but non limitatif, et est faite en référence aux dessins annexés, dans lesquels :
[Fig 1] La figure 1 est une vue partielle de côté, à l'échelle, d'une canne d'aspiration selon un mode de réalisation conforme à l'invention.

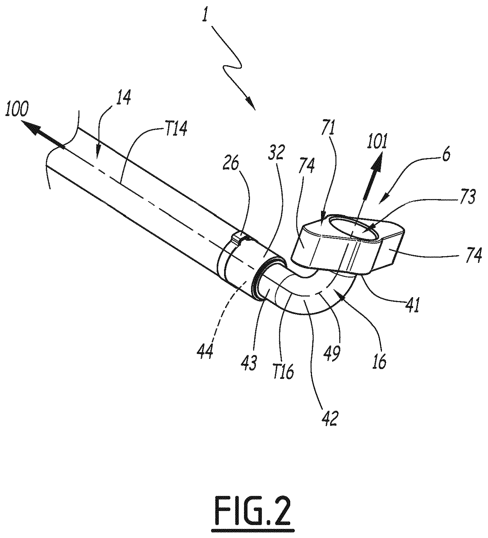

[Fig 2] La figure 2 est une vue en perspective partielle de la canne d'aspiration de la figure 1, à l'échelle.
[Fig 3] La figure 3 est une vue en perspective partielle d'un ensemble d'aspiration de peinture liquide, à l'échelle, comprenant la canne d'aspiration de la figure 1 et étant conforme à l'invention.
[Fig 4] La figure 4 est une coupe longitudinale partielle, à l'échelle, de l'ensemble d'aspiration de la figure 3.

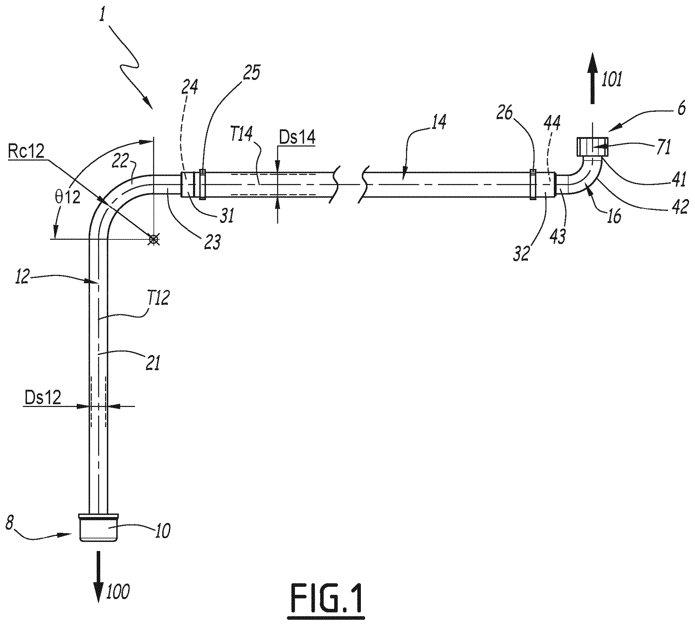

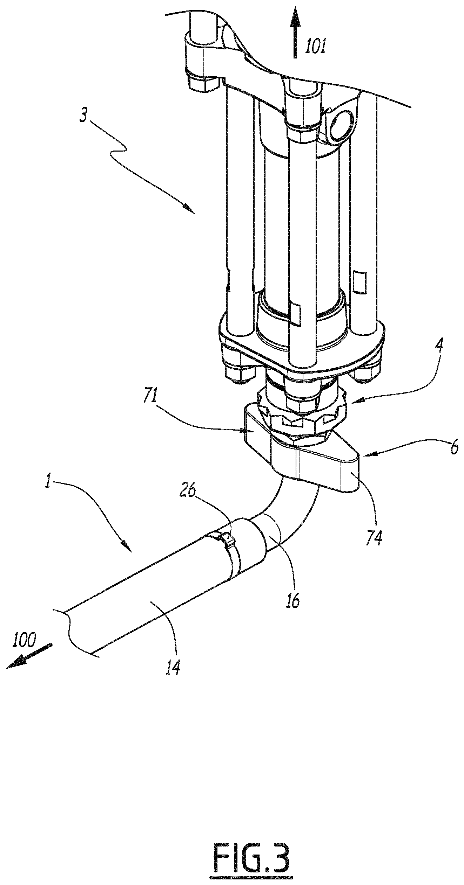

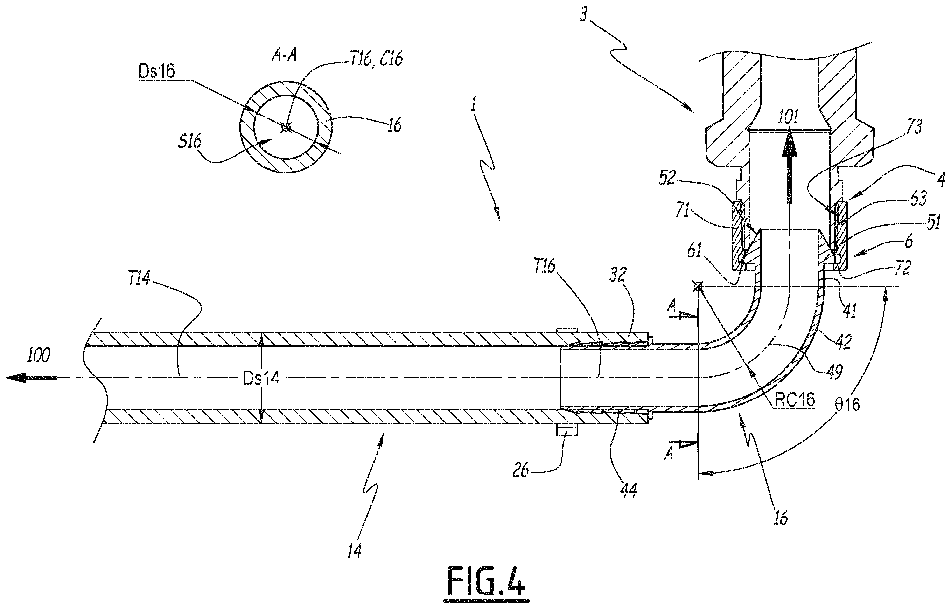

Les figures 1 et 4 montrent un ensemble d'aspiration de peinture liquide, comprenant une canne 1 et une pompe d'aspiration 3, cette dernière montrée partiellement sur les figures 3 et 4. L'ensemble d'aspiration constitue une partie d'un projecteur de peinture liquide, comprenant en outre un pistolet à peinture, non représenté, alimenté par la pompe d'aspiration 3. La pompe 3 est préférentiellement actionnée par un moteur pneumatique, non représenté, fournissant par exemple à cet effet de l'air comprimé, à une pression comprise par exemple entre 1 et 6 bars, à la pompe 3. La pompe 3 délivre quant à elle avantageusement une pression comprise entre 100 et 450 bars, grâce à l'alimentation en air comprimé fourni par le moteur. En variante, selon l'application, on peut prévoir que la pompe 3 délivre une pression inférieure à 100 bars, voire inférieure à 20 bars.

Le pistolet à peinture est fluidiquement connecté en sortie de la pompe 3, c'est-à-dire en aval de la pompe, par l'intermédiaire d'un tube flexible d'une longueur qui, en fonction de l'application peut être comprise entre 10 m et 50 m (mètres). La pompe 3 refoule ainsi de la peinture liquide pour alimenter le pistolet, par l'intermédiaire dudit tube flexible.

Le projecteur de peinture peut servir diverses applications, par exemple des applications sur chantier, telles que l'application d'une peinture à un véhicule naval, l'application d'enduit extérieur d'un bâtiment, ou la peinture d'un plafond. Dans ce cas, l'ensemble d'aspiration est avantageusement monté sur un chariot, ou tout autre support mobile. Alternativement, le projecteur de peinture peut être utilisé en usine. Dans ce cas, l'ensemble d'aspiration peut être monté sur un chariot, tout autre support mobile, ou sur un support fixe tel qu'un mur ou une potence.

La canne 1 comprend une extrémité de connexion 6, qui est fluidiquement connectée à une extrémité d'entrée 4 de la pompe 3, c'est-à-dire que la canne 1 est montée en amont de la pompe 3.

La canne 1 comprend une extrémité d'aspiration 8, opposée à l'extrémité de connexion 6, par l'intermédiaire de laquelle la canne 1 aspire de la peinture liquide provenant d'une réserve de peinture liquide, telle qu'un seau ou une cuve. En fonction de l'application, on peut prévoir que la réserve de peinture liquide soit un seau, par exemple un seau de 20 L (Litres) de peinture, ou une cuve, par exemple une cuve de 100 L (Litres) de peinture.

L'extrémité d'aspiration 8 est plongée dans la peinture liquide de la réserve pour que la peinture puisse être aspirée via la canne 1 sous l'action de la pompe 3. La peinture circule depuis l'extrémité d'aspiration 8 jusqu'à l'extrémité de connexion 6, où la peinture atteint la pompe 3. La canne 1 comprend une crépine 10 de filtration de peinture liquide, qui est portée par l'extrémité d'aspiration 8. La crépine 10 effectue ainsi un filtrage grossier de la peinture liquide avant son admission dans la canne 1, ce qui évite un encrassement trop important de la canne 1.

Pour la présente invention, le sens amont 100 et le sens aval 101 sont définis par rapport au sens de circulation de la peinture liquide en fonctionnement de travail de l'ensemble d'aspiration, c'est-à-dire lorsque le pistolet projette de la peinture refoulée par la pompe 3 et aspirée via la canne 1. Dès lors, en particulier, l'extrémité 8 est dans le sens amont 100 par rapport à l'extrémité 6, et l'extrémité 6 est dans le sens aval 101 par rapport à l'extrémité 8.

La canne d'aspiration 1 comprend un tube amont 12, un tube intermédiaire 14 et un tube aval 16, successivement fluidiquement connectés dans cet ordre d'amont 100 en aval 101, de sorte à former une conduite continue pour la peinture, depuis l'extrémité 8 jusqu'à l'extrémité 6. L'extrémité 8 est formée par l'extrémité libre amont du tube amont 12. L'extrémité 6 est formée par l'extrémité libre aval du tube aval 16.

Le tube amont 12 et le tube aval 16 sont rigides, c'est-à-dire qu'ils sont plus rigides que le tube intermédiaire 14, lequel est, au contraire, flexible. Pour cela par exemple, les tubes amont 12 et aval 16 sont en métal, par exemple en acier inoxydable, qui n'est pas conçu pour être déformé à la main par l'utilisateur. Au contraire, afin d'être flexible, le tube intermédiaire 14 est en matériau en matériau souple, en particulier en élastomère, par exemple en caoutchouc, ce matériau souple étant conçu pour être fléchi de façon réversible lors de l'utilisation, à la façon d'un tuyau d'arrosage de jardin. La canne 1 comprend de préférence un conducteur électrique souple, par exemple un fil électrique, reliant électriquement les tubes 12 et 16, ce qui permet d'éviter tout risque lié à l'inflammabilité éventuelle de la peinture liquide..

Sur les figures, le tube 14 est représenté coupé par souci de simplification, car le tube 14 mesure de préférence une longueur comprise entre 1 m et 2 m.

A partir de l'extrémité 8, le tube amont 12 comprend successivement une partie 21, préférentiellement rectiligne, un coude 22, dit « coude amont », une partie 23, préférentiellement rectiligne et perpendiculaire à la partie 21, et une extrémité aval 24, dite « extrémité de transmission », qui est emmanchée, de façon étanche à la peinture, dans une extrémité amont 31 du tube 14. L'emmanchement est avantageusement maintenu par une bague de serrage 25 externe. Le tube amont 12 est donc fluidiquement connecté au tube intermédiaire 14, via leurs extrémités respectives 24 et 31. En utilisation, la partie 21 est préférentiellement orientée à la verticale, ou est légèrement inclinée par rapport à la verticale, lorsque l'extrémité 8 est plongée dans la peinture liquide, alors que la partie 23 est orientée à l'horizontale, ou légèrement inclinée par rapport à l'horizontale. La canne 1 peut alors avantageusement reposer sur le bord du seau ou de la cuve de peinture par l'intermédiaire de la partie 23, alors que la partie 21 plonge en direction du fond du seau ou de la cuve, de sorte que l'extrémité 8 soit à proximité dudit fond ou contre ledit fond. Le coude 22 présente avantageusement une forme en arc de cercle, dont le rayon de courbure est suffisamment élevé pour réduire au maximum la perte de charge liée à la circulation de la peinture dans la canne 1.

Le tube amont 12 est préférentiellement de section transversale annulaire sur toute sa longueur. Le tube amont 12, en particulier sa paroi interne guidant la peinture liquide, délimite ainsi une succession de sections de passage transversales sensiblement discoïdes et de diamètre Ds12 constant, pour la peinture liquide, depuis l'extrémité 8 jusqu'à l'extrémité 24. Chaque section de passage du tube 12 définit un centre de section de passage, qui est le centre de la forme discoïde de la section de passage concernée. L'union des centres de section de passage constitue une trajectoire T12 du tube 12, montrée en trait mixte sur la figure 1. Les parties 21 et 23 du tube 12 s'étendent le long de parties rectilignes respectives de la trajectoire T12. Le coude 22 s'étend le long d'une partie courbe de la trajectoire T12. La trajectoire T12 est avantageusement plane, dans le plan de la figure 1. Le diamètre Ds12 est parfois nommé « diamètre intérieur » du tube 12.

Pour le tube amont 12, la partie courbe de la trajectoire T12 est avantageusement en forme d'arc de cercle plan, dans le plan de la figure 1 et présentant un rayon de courbure Rc12, le rapport du diamètre Ds12 sur le rayon de courbure Rc12 étant inférieur à 1, voire inférieur à 0,5. La perte de charge est donc minimisée lors de la circulation de la peinture liquide dans le tube 12.

De préférence, la partie courbe de la trajectoire T12 définit un angle au centre θ12 de 90°, ou sinon d'une valeur avantageusement comprise entre 85° et 95°. Lorsque la valeur de l'angle au centre θ12 est égale à 90°, la section de passage formée par l'extrémité 8 est perpendiculaire à la section de passage formée par l'extrémité 24. En d'autres termes, les deux parties rectilignes de la trajectoire T12 sont perpendiculaires.

De préférence, le tube intermédiaire 14 est de section transversale annulaire sur toute sa longueur. Le tube 14 délimite ainsi une succession de sections de passage transversales sensiblement discoïdes et de diamètre Ds14 proche du, ou égal au, diamètre Ds12. Chaque section de passage du tube 14 définit un centre de section de passage, qui est le centre de la forme discoïde de la section de passage concernée. L'union des centres de section de passage constitue une trajectoire T14 du tube 14, montrée en trait mixte sur la figure 1. Les tubes 12 et 14 sont avantageusement conformés et assemblés de sorte que la trajectoire T14 prolonge la trajectoire T12. Le diamètre Ds14 est parfois nommé « diamètre intérieur » du tube 14.

A partir de l'extrémité 6, le tube aval 16 comprend successivement une partie 41, préférentiellement rectiligne, un coude 42, dit « coude aval », une partie 43, préférentiellement rectiligne et perpendiculaire à la partie 41, et une extrémité amont 44, dite « extrémité de réception », qui est emmanchée, de façon étanche à la peinture, dans une extrémité aval 32 du tube 14. L'emmanchement est avantageusement maintenu par une bague de serrage 26 externe. Le tube aval 16 est donc fluidiquement connecté au tube intermédiaire 14, via leurs extrémités respectives 44 et 32. En utilisation, la partie 41 est préférentiellement orientée à la verticale, ou est légèrement inclinée par rapport à la verticale, lorsque l'extrémité 6 est connectée à la pompe 3, alors que la partie 43 est orientée à l'horizontale, ou légèrement inclinée par rapport à l'horizontale. Le tube 14 est alors orienté horizontalement au voisinage de son extrémité 32, ce qui évite de lui impartir une flexion trop importante si la hauteur de l'espace disponible sous la pompe est faible, ou si le bord du seau ou de la cuve de peinture est particulièrement haut par rapport au bas de la pompe 3.

De préférence, comme montré sur la figure 4 pour l'extrémité 44, chaque tube 12 et 16 comprend, à son extrémité 24 ou 44 respective, des nervures radiales externes pour fiabiliser les emmanchements avec le tube 14. De préférence, comme montré sur la figure 4 pour l'extrémité 44, chaque tube 12 et 16 comprend, à son extrémité 24 ou 44 respective, un épaulement externe contre lequel l'extrémité 31 ou 32 concernée vient en appui axial, ce qui permet d'assurer précisément le positionnement axial du tube 14 sur chaque tube 12 et 16 lorsqu'emmanchés.

Le coude 42 présente avantageusement une forme en arc de cercle, dont le rayon de courbure est suffisamment élevé pour réduire au maximum la perte de charge liée à la circulation de la peinture dans la canne 1.

Le tube aval 16 est préférentiellement de section transversale annulaire sur toute sa longueur. Le tube aval 16, en particulier sa paroi interne guidant la peinture liquide, délimite ainsi une succession de sections de passage S16 transversales pour la peinture liquide, depuis l'extrémité 44 jusqu'à l'extrémité 6. Chaque section de passage du tube 16 définit un centre de section de passage C16, qui est le centre de la forme discoïde de la section de passage concernée. L'union des centres de section de passage constitue une trajectoire T16 du tube 16, montrée en trait mixte sur notamment sur la figure 4. Comme montré sur la figure 4, les parties 41 et 43 du tube 16 s'étendent le long de parties rectilignes respectives de la trajectoire T16. Le coude 42 s'étend le long d'une partie courbe 49 de la trajectoire T16. Au moins pour la partie 49, et de préférence également pour toute la longueur de la trajectoire T16, les sections S16 sont sensiblement discoïdes et de diamètre Ds16 constant. La trajectoire T16 est avantageusement plane, dans le plan de la figure 4. Le diamètre Ds16 est parfois nommé « diamètre intérieur » du tube 16.

Une vue de section transversale A-A du tube 16 est montrée sur la figure 4, pour identifier l'une des sections de passage S16, le diamètre Ds16, le centre C16 de cette section de passage S16.

Pour la présente invention, « sensiblement discoïde » signifie que la section de passage concernée peut soit être exactement discoïde soit avoir une forme discoïde légèrement aplatie, du genre elliptique, ou légèrement déformée, par exemple ovée. La section de passage peut notamment être non strictement discoïde si elle est situé sur la partie courbe 49 de la trajectoire T16. Dans ce cas, le diamètre Ds16 désigne le plus grand diamètre de la section de passage.

Pour le tube aval 16, la partie courbe 49 de la trajectoire T16 est avantageusement en forme d'arc de cercle plan, dans le plan de la figure 4 et présentant un rayon de courbure Rc16. Dans le présent exemple, le rapport du diamètre Ds16 sur le rayon de courbure Rc16 est égal à 0,625, le diamètre Ds16 étant égal à 25 mm (millimètres) et le rayon de courbure Rc16 étant égal à 40 mm. De préférence, on prévoit que le diamètre Ds16 est compris entre 20 et 30 mm, alors que le rayon de courbure Rc16 est compris entre 31 et 50 mm. De préférence, on prévoit que le rapport du diamètre Ds16 sur le rayon de courbure Rc16 est compris entre 0,55 et 0,70. Plus généralement, on prévoit au moins que le rapport du diamètre Ds16 sur le rayon de courbure Rc16 est inférieur à 1, c'est-à-dire que (Ds16/Rc16) < 1. La perte de charge est donc minimisée lors de la circulation de la peinture liquide dans le tube 16, comme expliqué ci-avant.

De préférence, la partie courbe 49 de la trajectoire T16 définit un angle au centre θ16 de 90°, ou sinon d'une valeur avantageusement comprise entre 85° et 95°. Lorsque la valeur de l'angle au centre θ16 est égale à 90°, la section de passage S16 formée par l'extrémité 44 est perpendiculaire à la section de passage S16 formée par l'extrémité 6. En d'autres termes, les deux parties rectilignes de la trajectoire T16 sont alors perpendiculaires.

Les tubes 14 et 16 sont avantageusement conformés et assemblés de sorte que la trajectoire T16 prolonge la trajectoire T14.

De préférence, les diamètres Ds12 et Ds16 sont égaux entre eux, et sont préférentiellement égaux, approximativement au moins, au diamètre Ds14. De préférence, les tubes 12 et 16 sont fabriqués à partir d'un même tube brut, débité et travaillé pour former les tubes 12 et 16.

De préférence, comme montré sur la figure 4, la canne d'aspiration 1 comprend un épaulement radial externe 51 formé à l'extrémité 6. L'épaulement radial externe 51 porte une surface conique 52. La surface conique 52 est centrée et coaxiale avec la partie rectiligne de la trajectoire T16 située à hauteur de l'extrémité 6. Le surface conique 52 converge le long de la trajectoire T16 vers l'aval, c'est-à-dire ici, vers la pompe 3.

Lorsque la canne d'aspiration 1 est connectée à la pompe d'aspiration 3, comme c'est le cas sur la figure 4, la surface conique 52 est conçue pour être reçue en appui contre un siège de connexion 61 de la pompe 3, qui est complémentaire avec cette surface conique 52. De préférence, à l'extrémité 4, le siège 61 présente une forme tubulaire, à section annulaire, de diamètre plus élevé que celui du tube 16. Ainsi, la surface conique 52 vient en appui contre le siège 61 annulaire, de façon à centrer automatiquement le tube 16 sur l'extrémité d'entrée 4 de la pompe 3. Le contact de la surface conique 52 contre le siège 61 se fait sur toute la circonférence de la surface conique 52, de sorte qu'une étanchéité à la peinture liquide est assurée pour cette connexion, par serrage axial de la surface conique 52 contre le siège 61.

De préférence, le siège de connexion 61 est chanfreiné sur l'intérieur de façon à être de forme conique complémentaire avec la surface conique 52.

Pour assurer ce serrage axial et ainsi fluidiquement connecter le tube 16 à la pompe 3, de façon que, en outre, le tube 16 soit fixe par rapport à l'extrémité 4 de la pompe 3, la canne 1 comprend avantageusement un écrou de connexion 71. L'écrou de connexion 71 est monté à l'extrémité 6 du tube 16, en étant librement pivotant par rapport au tube 16, autour de la partie rectiligne de la trajectoire T16. L'écrou 71 comprend un épaulement interne 72 qui vient axialement en butée contre l'épaulement 51, de sorte que l'écrou ne peut pas être retiré du tube 16 si l'écrou 71 est tiré dans le sens aval. En outre, l'écrou 71 est apte à appliquer une force de serrage dans le sens aval, en prenant appui axial contre l'épaulement 51 via son épaulement 72.

L'écrou 71 comprend un filetage intérieur 73, s'étendant en aval de l'épaulement 72. L'écrou 71 présente ainsi une forme générale de jupe qui, sur la figure 4, est tournée vers le haut. L'extrémité 4 porte, vers l'aval à partir du siège 61, un filetage extérieur 63 complémentaire au filetage intérieur 73. Ainsi, l'écrou 71 peut être vissé sur l'extrémité 4 par vissage du filetage 73 avec le filetage 63, ce vissage entraînant une mise en contact et un serrage axial de la surface conique 52 contre le siège 61.

De façon particulièrement avantageuse, l'écrou 71 comprend deux oreilles 74, qui forment chacune une protrusion radiale externe. Ces oreilles sont réparties régulièrement sur la circonférence de l'écrou 71. Ces oreilles 74 permettent d'effectuer le serrage et le desserrage de l'écrou 71 sans outil. En effet, l'opérateur utilisant le projecteur de peinture liquide n'est pas nécessairement doté de tels outils alors qu'il peut avoir besoin de retirer la canne 1 de la pompe 3 pour effectuer un nettoyage, un changement de canne, un dé-colmatage ou un changement de couleur. En particulier, si l'écrou 71 est serré et accidentellement colmaté par de la peinture, il est possible de desserrer l'écrou en frappant au maillet sur les oreilles 74, alors que ce desserrage aurait été nettement plus difficile si l'écrou avait été un écrou à six pans.

En variante, l'écrou 71 comporte un nombre d'oreilles 74 différent de deux.

L'écrou 71 pourra par exemple comporter une unique oreille 74 tout en présentant les avantages développés ci-dessus, à savoir permettre d'effectuer le serrage et le desserrage de l'écrou 71 sans outil. En particulier, si l'écrou 71 est serré et accidentellement colmaté par de la peinture, il est possible de desserrer l'écrou en frappant au maillet sur l'oreille 74, alors que ce desserrage aurait été nettement plus difficile avec un autre écrou.

La canne d'aspiration 1 et l'ensemble d'aspiration définis dans ce qui précède son préférentiellement fabriqués à l'aide d'un procédé de fabrication défini ci-dessous.

Dans ce procédé de fabrication, on met en œuvre des étapes de fabrication du tube amont 12 et du tube aval 16.

Pour fabriquer ces deux tubes 12 et 16, on part avantageusement d'un même tube brut rectiligne, ou de deux tubes bruts respectifs identiques, dont le diamètre de section de passage est égal aux diamètres Ds12 et Ds16, qui sont eux-mêmes égaux entre eux. Pour chacun des tubes 12 et 16, on réalise le coude amont 22 et le coude aval 42 par cintrage du tube rectiligne, afin d'impartir un rayon de courbure Rc12 ou Rc16, en fonction du tube 12 ou 16 concerné, ledit rayon de courbure Rc12 ou Rc16 étant suffisamment élevé par rapport au diamètre de section de passage, soit Ds12 soit Ds16, afin de vérifier que (Ds12/Rc12)<1 et (Ds16/Rc16)<1.

Il est donc particulièrement aisé de fabriquer la canne 1, puisque les deux tubes 12 et 16 peuvent être obtenus avec un processus similaire de cintrage, de préférence à partir des mêmes profilés bruts.

En variante, le tube amont 12 peut être fourni plutôt que fabriqué. En variante, le tube amont 12 est fabriqué à partir d'une pièce brute différente de celle utilisée pour fabriquer le tube 16. En variante, le tube intermédiaire 14 peut être fabriqué plutôt que fourni.

Le procédé de fabrication comprend également une étape d'adjonction de la crépine 10 au tube 12. Le procédé de fabrication comprend également une étape de formation ou d'adjonction de l'épaulement 51 sur le tube 16.

Une fois les tubes 12, 14 et 16 obtenus, le procédé comprend une étape d'assemblage desdits tubes 12, 14 et 16 ensemble, de préférence par emmanchement comme expliqué dans ce qui précède.

Toute caractéristique décrite dans ce qui précède pour un mode de réalisation ou une variante, peut être mise en œuvre dans les autres modes de réalisation et variantes décrits dans ce qui précède, pour autant que techniquement possible.

## Revendications

1. Canne (1) d'aspiration de peinture liquide, conçue pour être connectée à une pompe (3) d'aspiration de peinture liquide et comprenant :
- un tube intermédiaire (14) flexible ; et
- un tube aval (16) rigide, qui comprend :
∘ une extrémité de connexion (6), conçue pour être fluidiquement connectée à la pompe (3),
∘ une extrémité de réception (44), et
∘ un coude aval (42), entre l'extrémité de réception (44) et l'extrémité de connexion (6),
dans laquelle le tube aval (16) délimite une succession de sections de passage (S16) transversales pour de la peinture liquide, depuis l'extrémité de réception (44) jusqu'à l'extrémité de connexion (6), chaque section de passage (S16) définissant un centre (C16) de section de passage (S16), l'union des centres (C16) de section de passage (S16) constituant une trajectoire (T16) du tube aval (16), le coude aval (42) s'étendant le long d'une partie courbe (49) de la trajectoire (T16), le long de laquelle les sections de passage (S16) sont de forme sensiblement discoïde et présentent un diamètre (Ds16) de préférence constant,
la canne (1) étant **caractérisée en ce que** :
- la canne (1) comprend un tube amont (12) rigide, qui comprend une extrémité d'aspiration (8) et un coude amont (22), l'extrémité d'aspiration (8) étant conçue pour être plongée dans la peinture liquide pour une aspiration de peinture liquide au travers de la canne (1), le tube intermédiaire (14) connectant fluidiquement le tube amont (12) à l'extrémité de réception (44) ;
- la canne (1) comprend en outre une crépine (10) de filtration de peinture liquide, portée par l'extrémité d'aspiration (8) ; et
- la partie courbe (49) de la trajectoire (T16) est en forme d'arc de cercle plan, présentant un rayon de courbure (Rc16), le rapport du diamètre (Ds16) sur le rayon de courbure (Rc16) étant inférieur à 1.

2. Canne (1) selon la revendication 1, dans laquelle le rapport du diamètre (Ds16) sur le rayon de courbure (Rc16) est compris entre 0,55 et 0,70, et est préférentiellement égal à 0,625.

3. Canne (1) selon l'une quelconque des revendications précédentes, dans laquelle :
- le diamètre (Ds16) est compris entre 20 mm et 30 mm, et est préférentiellement égal à 25 mm ; et
- le rayon de courbure (Rc16) est compris entre 31 mm et 50 mm, et est préférentiellement égal à 40 mm.

4. Canne (1) selon l'une quelconque des revendications précédentes, dans laquelle la partie courbe (49) de la trajectoire (T16) définit un angle au centre (θ16) de valeur comprise entre 85° et 95°, la valeur de l'angle au centre (θ16) étant préférentiellement égale à 90° de sorte que la section de passage (S16) de l'extrémité de réception (44) est perpendiculaire à la section de passage (S16) de l'extrémité de connexion (6).

5. Canne (1) selon l'une quelconque des revendications précédentes, comprenant en outre un écrou de connexion (71) pour fixement attacher le tube aval (16) à la pompe (3), l'écrou de connexion (71) étant monté à l'extrémité de connexion (6), de façon librement pivotante par rapport au tube aval (16) autour de la trajectoire (T16), l'écrou de connexion (71) comprenant au moins une oreille (74) par l'intermédiaire de laquelle le serrage de l'écrou de connexion (71) peut être opéré.

6. Canne (1) selon l'une quelconque des revendications précédentes, la canne (1) comprenant un épaulement radial externe (51) formé à l'extrémité de connexion (6) et formant une surface conique (52) conçue pour être reçue en appui contre un siège de connexion (61) complémentaire appartenant à la pompe (3), lorsque la canne (1) est connectée à la pompe (3), la surface conique (52) étant centrée sur la trajectoire (T16) et convergeant le long de la trajectoire (T16) dans un sens aval (101) dirigé à l'opposé de l'extrémité de réception (44).

7. Canne (1) selon l'une quelconque des revendications précédentes, dans laquelle le tube amont (12) et le tube aval (16) sont métalliques, de préférence en acier inoxydable, et le tube intermédiaire (14) en matériau souple, de préférence en élastomère.

8. Ensemble d'aspiration de peinture liquide pour un projecteur de peinture liquide, l'ensemble d'aspiration comprenant une canne (1), conforme à l'une quelconque des revendications précédentes, et une pompe (3), la pompe (3) étant fluidiquement connectée à l'extrémité de connexion (6) de la canne (1) de façon à pouvoir aspirer de la peinture liquide par l'intermédiaire de la canne (1).

9. Procédé de fabrication d'une canne (1) conforme à l'une quelconque des revendications 1 à 7, ou d'un ensemble d'aspiration conforme à la revendication 8, le procédé comprenant les étapes suivantes :
- fourniture ou fabrication du tube amont (12) ;
- fourniture ou fabrication du tube intermédiaire (14) ;
- fabrication du tube aval (16) à partir d'un tube brut rectiligne, la fabrication du tube aval (16) incluant une sous-étape de cintrage du tube brut rectiligne pour former le coude aval (42) du tube aval (16) avec le rayon de courbure (Rc16), de sorte que le rapport du diamètre (Ds16) sur le rayon de courbure (Rc16) est inférieur à 1 ;
- adjonction de la crépine (10) au tube amont (12) ; et
- une fois les tubes (12, 14, 16) obtenus, assemblage du tube amont (12), du tube intermédiaire (14) et du tube aval (16) ensemble.

## Patentansprüche

1. Ansaugrohr (1) für flüssige Farbe, das konfiguriert ist, um mit einer Pumpe (3) zum Ansaugen von flüssiger Farbe verbunden zu werden, und umfassend:
- ein flexibles Zwischenrohr (14); und
- ein starres stromabwärtiges Rohr (16), das Folgendes umfasst:
∘ ein Verbindungsende (6), das konfiguriert ist, um fluidisch mit der Pumpe (3) verbunden zu sein,
∘ ein Aufnahmeende (44), und
∘ ein stromabwärtiges Bogenstück (42) zwischen dem Aufnahmeende (44) und dem Verbindungsende (6),
wobei das stromabwärtige Rohr (16) eine Abfolge von quer verlaufenden Durchgangsabschnitten (S16) für flüssige Farbe von dem Aufnahmeende (44) bis zu dem Verbindungsende (6) begrenzt, wobei jeder Durchgangsabschnitt (S16) eine Mitte (C16) des Durchgangsabschnitts (S16) definiert, die Vereinigung der Mitten (C16) der Durchgangsabschnitte (S16) eine Strecke (T16) des stromabwärtigen Rohrs (16) bildet, wobei sich das stromabwärtige Bogenstück (42) entlang eines gekrümmten Teils (49) der Strecke (T16) erstreckt, entlang dessen die Durchgangsabschnitte (S16) im Wesentlichen diskoidal geformt sind und einen vorzugsweise konstanten Durchmesser (Ds16) aufweisen, wobei das Rohr (1) **dadurch gekennzeichnet ist, dass**:
- das Rohr (1) ein starres stromaufwärtiges Rohr (12) umfasst, das ein Ansaugende (8) und ein stromaufwärtiges Bogenstück (22) umfasst, wobei das Ansaugende (8) konfiguriert ist, um in die flüssige Farbe eingetaucht zu werden, um durch das Rohr (1) flüssige Farbe zu saugen, wobei das Zwischenrohr (14) das stromaufwärtige Rohr (12) fluidisch mit dem Aufnahmeende (44) verbindet;
- das Rohr (1) ferner einen Siebkorb (10) zum Filtern von flüssiger Farbe umfasst, das von dem Ansaugende (8) getragen wird; und
- der gekrümmte Teil (49) der Strecke (T16) die Form eines ebenen Kreisbogens aufweist, der einen Krümmungsradius (Rc16) aufweist, wobei das Verhältnis des Durchmessers (Ds16) zu dem Krümmungsradius (Rc16) kleiner ist als 1.

2. Rohr (1) nach Anspruch 1, wobei das Verhältnis des Durchmessers (Ds16) zu dem Krümmungsradius (Rc16) zwischen 0,55 und 0,70 liegt und vorzugsweise gleich 0,625 ist.

3. Rohr (1) nach einem der vorherigen Ansprüche, wobei:
- der Durchmesser (Ds16) zwischen 20 mm und 30 mm liegt und vorzugsweise gleich 25 mm ist; und
- der Krümmungsradius (Rc16) zwischen 31 mm und 50 mm liegt und vorzugsweise gleich 40 mm ist.

4. Rohr (1) nach einem der vorherigen Ansprüche, wobei der gekrümmte Abschnitt (49) der Strecke (T16) einen Mittelpunktswinkel (θ16) mit einem Wert zwischen 85° und 95° definiert, wobei der Wert des Mittelpunktswinkels (θ16) vorzugsweise gleich 90° ist, sodass der Durchgangsabschnitt (S16) des Aufnahmeendes (44) senkrecht zu dem Durchgangsabschnitt (S16) des Verbindungsendes (6) ist.

5. Rohr (1) nach einem der vorherigen Ansprüche, ferner umfassend eine Verbindungsmutter (71) zum festen Anbringen des stromabwärtigen Rohrs (16) an der Pumpe (3), wobei die Verbindungsmutter (71) an dem Verbindungsende (6) in Bezug auf das stromabwärtige Rohr (16) um die Strecke (T16) frei schwenkbar montiert ist, die Verbindungsmutter (71) umfassend mindestens eine Öse (74), mittels derer das Anziehen der Verbindungsmutter (71) bewirkt werden kann.

6. Rohr (1) nach einem der vorherigen Ansprüche, das Rohr (1) umfassend eine radial äußere Schulter (51), die an dem Verbindungsende (6) gebildet ist und eine konische Oberfläche (52) bildet, die konfiguriert ist, um in Anlage gegen einen komplementären Verbindungssitz (61) aufgenommen zu werden, der zu der Pumpe (3) gehört, wenn das Rohr (1) mit der Pumpe (3) verbunden ist, wobei die konische Fläche (52) auf der Strecke (T16) zentriert ist und entlang der Strecke (T16) in einer stromabwärtigen Richtung (101) konvergiert, die von dem Aufnahmeende (44) weg gerichtet ist.

7. Rohr (1) nach einem der vorherigen Ansprüche, wobei das stromaufwärtige Rohr (12) und das stromabwärtige Rohr (16) aus Metall, vorzugsweise aus rostfreiem Stahl, und das Zwischenrohr (14) aus einem flexiblen Material, vorzugsweise aus Elastomer, sind.

8. Ansauganordnung flüssiger Farbe für einen Projektor flüssiger Farbe, die Ansauganordnung umfassend ein Rohr (1) nach einem der vorherigen Ansprüche und eine Pumpe (3), wobei die Pumpe (3) fluidisch mit dem Verbindungsende (6) des Rohrs (1) verbunden ist, um mittels des Rohrs (1) flüssige Farbe ansaugen zu können.

9. Verfahren zur Herstellung eines Rohrs (1) nach einem der Ansprüche 1 bis 7 oder Ansauganordnung nach Anspruch 8, das Verfahren umfassend die folgenden Schritte:
- Bereitstellen oder Herstellen des stromaufwärtigen Rohrs (12);
- Bereitstellen oder Herstellen des Zwischenrohrs (14);
- Herstellen des stromabwärtigen Rohrs (16) aus einem geraden rohen Rohr, wobei die Herstellung des stromabwärtigen Rohrs (16) einen Unterschritt eines Biegens des geraden rohen Rohrs umfasst, um das stromabwärtige Bogenstück (42) des stromabwärtigen Rohrs (16) mit dem Krümmungsradius (Rc16) zu bilden, sodass das Verhältnis des Durchmessers (Ds16) zu dem Krümmungsradius (Rc16) kleiner ist als 1;
- Hinzufügen des Siebkorbs (10) zu dem stromaufwärtigen Rohr (12); und
- nachdem die Rohre (12, 14, 16) erlangt wurden, Zusammenbauen des stromaufwärtigen Rohrs (12), des Zwischenrohrs (14) und des stromabwärtigen Rohrs (16).

## Claims

1. A liquid paint suction rod (1), designed to be connected to a liquid paint suction pump (3) and comprising:
- a flexible intermediate tube (14); and
- a rigid downstream tube (16), which comprises:
∘ a connecting end (6), designed to be fluidly connected to the pump (3),
∘ a receiving end (44), and
∘ a downstream elbow (42), between the receiving end (44) and the connecting end (6),
wherein the downstream tube (16) delimits a series of transverse passage sections (S16) for liquid paint, from the receiving end (44) to the connecting end (6), each passage section (S16) defining a passage section (S16) center (C16), the union of the passage section (S16) centers (C16) constituting a trajectory (T16) of the downstream tube (16), the downstream elbow (42) extending along a curved part (49) of the trajectory (T16), along which the passage sections (S16) have a substantially discoid shape and have a preferably constant diameter (Ds16),
the rod (1) being **characterized in that**:
- the rod (1) comprises a rigid upstream tube (12), which comprises a suction end (8) and an upstream elbow (22), the suction end (8) being designed to be submerged in the liquid paint in order to suction liquid paint through the rod (1), the intermediate tube (14) fluidly connecting the upstream tube (12) to the receiving end (44);
- the rod (1) further comprises a liquid paint filtering strainer (10), borne by the suction end (8); and
- the curved part (49) of the trajectory (T16) is in the shape of a planar arc of circle, having a curve radius (Rc16), the ratio of the diameter (Ds16) to the curve radius (Rc16) being less than 1.

2. The rod (1) according to claim 1, wherein the ratio of the diameter (Ds16) to the curve radius (Rc16) is between 0.55 and 0.70, and is preferably equal to 0.625.

3. The rod part (1) according to any one of the preceding claims, wherein:
- the diameter (Ds16) is between 20 mm and 30 mm, and is preferably equal to 25 mm; and
- the curve radius (Rc16) is between 31 mm and 50 mm, and is preferably equal to 40 mm.

4. The rod (1) according to any one of the preceding claims, wherein the curved part (49) of the trajectory (T16) defines a center angle (θ16) with a value of between 85° and 95°, the value of the center angle (θ16) preferably being equal to 90° such that the passage section (S16) of the receiving end (44) is perpendicular to the passage section (S16) of the connecting end (6).

5. The rod (1) according to any one of the preceding claims, further comprising a connecting nut (71) to securely attach the downstream tube (16) to the pump (3), the connecting nut (71) being mounted at the connecting end (6), freely pivoting relative to the downstream tube (16) around the trajectory (T16), the connecting nut (71) comprising at least one lug (74) by means of which the tightening of the connecting nut (71) can be done.

6. The rod (1) according to any one of the preceding claims, the rod (1) comprising an outer radial shoulder (51) formed at the connecting end (6) and forming a conical surface (52) designed to be able to be received by bearing against a complementary connecting seat (61) belonging to the pump (3), when the rod (1) is connected to the pump (3), the conical surface (52) being centered on the trajectory (T16) and converging along the trajectory (T16) in a downstream direction (101) oriented away from the receiving end (44).

7. The rod (1) according to any one of the preceding claims, wherein the upstream tube (12) and the downstream tube (16) are made from metal, preferably stainless steel, and the intermediate tube (14) from a flexible material, preferably elastomer.

8. A liquid paint suction assembly for a liquid paint sprayer, the suction assembly comprising a rod (1), according to any one of the preceding claims, and a pump (3), the pump (3) being fluidly connected to the connecting end (6) of the rod (1) so as to be able to suction liquid paint by means of the rod (1).

9. A method for manufacturing a rod (1) according to any one of claims 1 to 7, or a suction assembly according to claim 8, the method comprising the following steps:
- providing or manufacturing the upstream tube (12);
- providing or manufacturing the intermediate tube (14);
- manufacturing the downstream tube (16) from a raw rectilinear tube, the manufacturing of the downstream tube (16) including a step for bending the raw rectilinear tube in order to form the downstream elbow (42) of the downstream tube (16) with the curve radius (Rc16), such that the ratio of the diameter (Ds16) to the curve radius (Rc16) is less than 1;
- adding of the strainer (10) to the upstream tube (12); and
- once the tubes (12, 14, 16) are obtained, assembling the upstream tube (12), the intermediate tube (14) and the downstream tube (16).
